# EUROPEAN PATENT APPLICATION

(11) **EP 3 760 042 A1**
(43) Date of publication of application: **06.01.2021**
(21) Application number: 19761054.6
(22) Date of filing: 28.02.2019
(51) Int. Cl.: A01K 61/80, G06Q 50/02

(54) **AUTOMATIC FEEDING ASSISTANCE DEVICE, AUTOMATIC FEEDING ASSISTANCE METHOD, AND RECORDING MEDIUM**

(30) Priority: 02.03.2018 JP 2018037465
(71) Applicant: Umitron Pte. Ltd., 079903 (SG)
(72) Inventor: FUJIWARA, Ken, Tokyo 107-0052 (JP); YAMADA, Masahiko, 079903 (SG)
(74) Representative: Betten & Resch
(86) International application number: PCT/JP2019/007866
(87) International publication number: WO 2019/168108

(57) **Abstract**

In order to solve a conventional problem that it is not easy to place an order, at a preferable timing, for food that is to be supplied to fish using an automatic feeder, an automatic feeding assistance apparatus includes: a remaining amount information acquiring unit that acquires remaining amount information regarding a remaining amount of food in an automatic feeder configured to supply food to fish; a judging unit that judges whether or not the remaining amount of food is so small that a predetermined condition is satisfied by the remaining amount information; and a transmitting unit that, in a case in which the judging unit judges that the remaining amount of food is so small that the predetermined condition is satisfied, transmits ordering information regarding placing an order for food. Accordingly, it is possible to place an order, at a preferable timing, for food that is to be supplied to fish using an automatic feeder, or assist a user in placing the order.

## Description

### Technical Field

The present invention relates to an automatic feeding assistance apparatus for making an automatic feeder supply food to fish or for assisting a user in setting the automatic feeder.

### Background Art

Conventionally, there are automatic feeders that are provided in a fish enclosure for culturing fish, and configured to supply a preset amount of food at two or more preset times (see Patent Document 1, for example).

### Citation List

### Patent Document

Patent Document 1: JP 2001-8573A

### Summary of Invention

### Technical Problem

However, in conventional techniques, in order to place an order for food with which an automatic feeder is to be replenished, for example, a culturist has to frequently visually check the amount of food remaining in the automatic feeder (hereinafter, a remaining amount), and determine a preferable ordering timing (e.g., an ordering timing at which the automatic feeder can be replenished immediately before it has run out of food), and the culturist or a staff member or the like belonging to that organization (hereinafter, a user) has to place an order at that timing.

Furthermore, a preferable feeding amount and timing may change, for example, according to the fish state, the water temperature, or the like, and thus, in conventional techniques, a culturist has to frequently observe fish or measure the water temperature and the like, and change settings regarding a feeding amount or a feeding timing of an automatic feeder according to the fish state, the water temperature, or the like. If the settings are changed, a preferable ordering timing also changes, and thus it is not easy to place an order.

In this manner, conventionally, it is not easy to place an order, at a preferable timing, for food that is to be supplied to fish using an automatic feeder.

Furthermore, conventionally, it is not easy to make an automatic feeder supply a preferable amount of food to fish at a preferable timing.

Thus, there is a demand for an automatic feeding assistance apparatus capable of placing an order, at a preferable timing, for food that is to be supplied to fish using an automatic feeder, or assisting a user in placing the order.

Moreover, there is a demand for an automatic feeding assistance apparatus capable of making an automatic feeder supply a preferable amount of food to fish at a preferable timing, or assisting a user in setting the automatic feeder.

### Solution to Problem

A first aspect of the present invention is directed to an automatic feeding assistance apparatus including: a remaining amount information acquiring unit that acquires remaining amount information regarding a remaining amount of food in an automatic feeder configured to supply food to fish; a judging unit that judges whether or not the remaining amount of food is so small that a predetermined condition is satisfied by the remaining amount information; and a transmitting unit that, in a case in which the judging unit judges that the remaining amount of food is so small that the predetermined condition is satisfied, transmits ordering information regarding placing an order for food.

With this configuration, it is possible to place an order, at a preferable timing, for food that is to be supplied to fish using an automatic feeder, or assist a user in placing the order.

Furthermore, a second aspect of the present invention is directed to the automatic feeding assistance apparatus according to the first aspect, further including: a supplier information storage unit in which supplier information for specifying a supplier of food is stored, wherein the transmitting unit transmits the ordering information to the supplier specified with the supplier information.

With this configuration, it is possible to place an order, at a preferable timing, for food that is to be supplied to fish using an automatic feeder.

Furthermore, a third aspect of the present invention is directed to the automatic feeding assistance apparatus according to the first aspect, further including: a culturist information storage unit in which culturist information for specifying a culturist of fish is stored, wherein the transmitting unit transmits the ordering information that prompts for placing an order for food, to the culturist specified with the culturist information.

With this configuration, it is possible to assist a user in placing an order, at a preferable timing, for food that is to be supplied to fish using an automatic feeder.

Furthermore, a fourth aspect of the present invention is directed to the automatic feeding assistance apparatus according to any one of the first to third aspects, wherein the remaining amount information acquiring unit receives remaining amount information from the two or more automatic feeders, and the automatic feeding assistance apparatus further includes: a statistical processing unit that performs statistical processing on two or more pieces of remaining amount information received from two or more automatic feeders, thereby acquiring a statistical processing result; and a statistical processing result output unit that outputs the statistical processing result.

With this configuration, it is possible for a user to see a statistical processing result (e.g., the total, the average, the distribution, etc.) regarding the remaining amount of food in each of the two or more automatic feeders, and, as a result, it is possible to accurately place an order for food collectively or individually for each of the two or more automatic feeders.

Furthermore, a fifth aspect of the present invention is directed to the automatic feeding assistance apparatus according to any one of the first to fourth aspects, further including: a fish status information acquiring unit that acquires fish status information indicating a status of fish that are being cultivated, using the remaining amount information acquired by the remaining amount information acquiring unit; and a fish status information output unit that outputs the fish status information.

With this configuration, it is possible for a user to see a fish state, and, as a result, it is possible to accurately perform management (e.g., feeding, shipment, etc.) of fish.

Furthermore, a sixth aspect of the present invention is directed to the automatic feeding assistance apparatus according to the fifth aspect, wherein the fish status information is fish type information indicating the type of fish, or number information regarding the number of fish that are to be brought to the market.

With this configuration, it is possible for a user to see the type of fish or the number of fish that are to be shipped, and, as a result, it is possible to accurately ship various types of fish.

Furthermore, a seventh aspect of the present invention is directed to the automatic feeding assistance apparatus according to any one of the first to sixth aspects, further including: a parameter acquiring unit that acquires one or more parameters regarding a movement of a fish; and a predicting unit that acquires a prediction result, which is a result obtained by predicting one or both of a feeding amount and a feeding time, using the one or more parameters.

With this configuration, it is possible to make an automatic feeder supply a preferable amount of food to fish at a preferable timing, or to assist a user in setting the automatic feeder.

Furthermore, an eighth aspect of the present invention is directed to the automatic feeding assistance apparatus according to the seventh aspect, wherein one of the one or more parameters is a fish body velocity obtained by dividing a movement velocity of a fish by a length of the fish.

With this configuration, it is possible to acquire a prediction result, which is a result obtained by predicting one or both of the feeding amount and the feeding time, using the fish body velocity, without depending on the size of the fish.

### Advantageous Effects of Invention

According to the present invention, it is possible to place an order, at a preferable timing, for food that is to be supplied to fish using an automatic feeder, or assist a user in placing the order. Furthermore, it is possible to make an automatic feeder supply a preferable amount of food to fish at a preferable timing, or assist a user in setting the automatic feeding.

### Brief Description of Drawings

FIG. 1 is a block diagram of an information system in an embodiment.
FIG. 2 is a flowchart illustrating an operation of an automatic feeding assistance apparatus.
FIG. 3 is a conceptual diagram of the information system.
FIG. 4 is a data structure table of remaining amount information.
FIG. 5 is a diagram showing an output example of fish status information, statistical processing results, and parameters.
FIG. 6 is an external view of a computer system.
FIG. 7 is a diagram showing an example of the internal configuration of the computer system.

### Description of Embodiment

Hereinafter, an embodiment of an automatic feeding assistance apparatus and the like will be described with reference to the drawings. It should be noted that constituent elements denoted by the same reference numerals in the embodiments perform similar operations, and thus a description thereof may not be repeated.

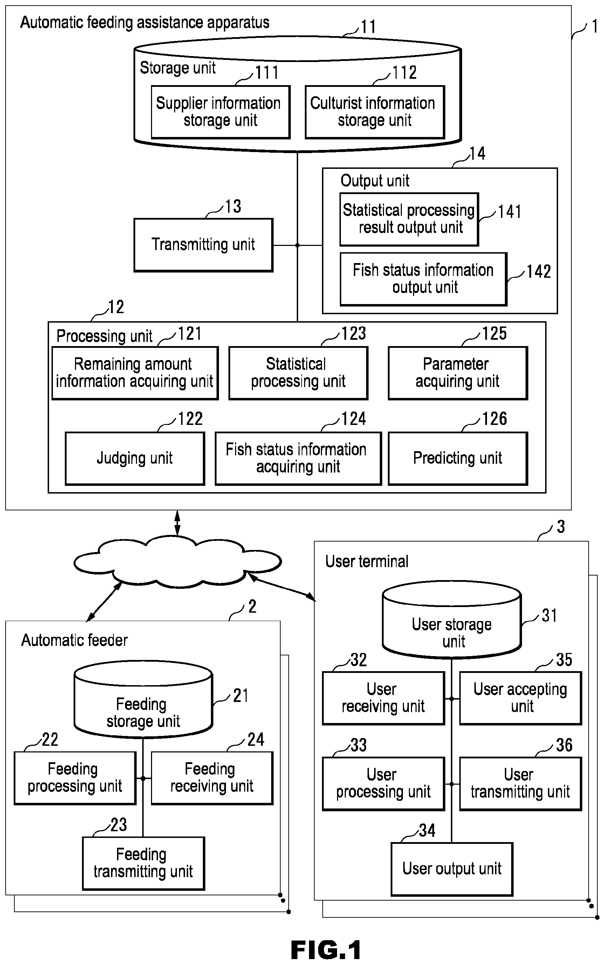

FIG. 1 is a block diagram of an information system in this embodiment. The information system includes an automatic feeding assistance apparatus 1, one or at least two automatic feeders 2, and one or at least two user terminals 3. The one or more automatic feeders 2 and the one or more user terminals 3 are communicably connected to the automatic feeding assistance apparatus 1, for example, via a network such as the Internet or a LAN, a wireless or wired communication line, or the like.

The automatic feeding assistance apparatus 1 is, for example, a server of organizations such as companies or groups for culturing fish, and may be a constituent part of an automatic feeder 2, or may be combined into a user terminal 3, that is, there is no limitation on the location and the type thereof. The constituent part of the automatic feeder 2 is typically a constituent part built in the automatic feeder 2 (e.g., a module provided in a later-described controller), but may be an external constituent part. The state of being combined into the user terminal 3 is, for example, a state in which an app such as later-described software is installed on a mobile terminal that realizes the user terminal 3, so that the mobile terminal functions also as the automatic feeding assistance apparatus 1. Examples of the mobile terminal include a smartphone, a tablet device, a mobile phone, and a laptop, but there is no limitation on the type thereof.

The fish is typically various types of fishes, but may be considered as encompassing shellfishes such as clams and short-necked clams, and crustaceans such as shrimps and crabs.

The automatic feeding assistance apparatus 1 includes, for example, a satellite receiver. The state of including a satellite receiver may be a state in which a satellite receiver is built in or externally attached to the automatic feeding assistance apparatus 1, or a state in which a satellite receiver can communicate with the automatic feeding assistance apparatus 1 via a network or the like. The same applies to various sensors (described later) included in the automatic feeder 2.

The satellite receiver is a device or module that receives information from an artificial satellite. The artificial satellite is, for example, an earth observation satellite such as a weather satellite, but may be a broadcast satellite, a communication satellite, or the like, and there is no limitation on the type thereof. The weather satellite is an artificial satellite that performs weather observation. The weather observation is, for example, observation of clouds, observation of water vapor, observation of rain or wind, observation of the atmospheric temperature or the seawater temperature, or the like. The weather satellite includes various observation devices, and performs weather observation using the various observation devices, thereby acquiring weather information. Examples of the various observation devices include a camera using visible light, an infrared camera, and a microwave scatterometer, but there is no limitation on the type thereof. For example, the thus acquired weather information is transmitted (e.g., broadcasted) by the weather satellite or via a broadcast satellite or a communication satellite to the earth.

The earth observation satellite is an artificial satellite that performs observation of the earth. The observation is, for example, the weather observation described above, but may be capturing an image of the earth surface (e.g., the ground surface, the sea surface, etc.). In the earth observation satellite, for example, an image of the earth surface is captured using electromagnetic waves with various wavelengths such as radio waves, infrared rays, and visible light, and image information with various wavelengths is acquired. For example, the acquired image information is also transmitted by the earth observation satellite or via a broadcast satellite or the like to the earth.

Each automatic feeder 2 is provided in a fish enclosure in which fish are cultivated, and is a device that can automatically supply food to fish. The state in which feeding can be automatically supplied is basically a state in which a preset amount of food is supplied to fish at preset times.

Note that the automatically supplying may be considered as encompassing, for example, a case in which the feeding amount or the feeding timing that is set in advance or at a current time may be changed according to an instruction (e.g., a change instruction) from a user. The feeding amount is the amount of food that is supplied to fish (e.g., the weight, the quantity, etc.), and the feeding timing is a time at which food is supplied to fish (e.g., one or at least two times of day, a cyclic period, etc.). Moreover, that the automatically supplying may be considered as encompassing, for example, a case in which feeding can be performed also through remote control from another apparatus such as the user terminal 3.

The fish enclosure is a location at which fish are cultivated. The fish enclosure is, for example, a portion inside a net or basket that is arranged inside water such as a sea, a lake, a marsh, or the like, but may not be a range that is absolutely defined by a net or the like. Alternatively, the fish enclosure may be, for example, a bay in the shore of a sea, part of a river, or an artificial reservoir, pool, or the like that is arranged on the land, that is, there is no limitation on the form, the arrangement location, and the like thereof.

Examples of the food include raw food, moist pellets (MP), dry pellets (DP), extruded pellets (EP), fish powder alternative feed (alternative feed), or the like. The raw food is food that is raw, and examples thereof include a slice of raw fish and earthworm. MP is food of an undercooked pellet-type, and produced, for example, by granulating a mixture of raw food, fish powder, fish oil, and the like into a granular form. The DP is food of a dry pellet-type, and produced, for example, by granulating fish powder and the like into a granular form. The EP is food that is of a pellet-type similar to DP, but is feed whose raw materials are made more likely to be digested and absorbed through treatment at high temperature and high pressure. The fish powder alternative feed is feed that can be used as an alternative to fish powder or fish oil. The fish powder alternative feed is produced, for example, from cereals such as soybeans, insects, alga, unicellular organisms such as yeasts, or the like, but there is no limitation on the raw material thereof. The fish powder alternative feed is, for example, those of a pellet-type such as DP or EP, but there is no limitation on the hardness and the shape thereof. Note that there is no limitation on the form (e.g., the hardness, the shape, etc.) or the material of the food.

Furthermore, examples of the MP and DP include those with various sizes such as large, medium, and small sizes, and there is no limitation on the size of the pellet-type food. Moreover, the food contains, for example, various ingredients such as protein and vitamins, and there is no limitation on the ingredients of the food. The food may be made of, for example, two or more types of materials, and there is no limitation on the combination and the blending ratio thereof.

The automatic feeder 2 includes a vessel that accommodates food, a release mechanism that releases the food accommodated in the vessel into a fish enclosure, a motor that drives the release mechanism, a controller that controls the motor, and a solar panel, a battery, or the like that supplies the electric power to each of the motor, the controller, and the like. For example, the controller controls the motor such that a preset amount of food is released at one or at least two preset times, out of the food accommodated in the vessel.

Furthermore, the automatic feeder 2 typically includes a sensor (hereinafter, a remaining amount sensor) for detecting the amount of food remaining in the vessel (hereinafter, it may be referred to as a remaining amount), and a communication module for transmitting information such as the remaining amount detected by the remaining amount sensor to the automatic feeding assistance apparatus 1 or the like. The remaining amount sensor is, for example, a distance sensor such as a laser sensor, but may be a weight sensor or an infrared sensor, and there is no limitation on the type thereof, as long as it is a sensor for detecting original information from which the remaining amount information can be acquired. The electric power to the remaining amount sensor and the communication module is supplied from the above-described solar panel or the like.

Furthermore, the controller can change, for example, one or more of the amount of food (feeding amount) and one or more feeding times (feeding timings) that are set in advance or at a current time, according to external information. The external information is, for example, a prediction result transmitted from the automatic feeding assistance apparatus 1 or a change instruction transmitted from the user terminal 3, but there is no limitation on the transmission source and the type of information. The prediction result and the change instruction will be described later. The communication module also has a receiving function to receive the prediction result and the like.

Moreover, the automatic feeder 2 has, for example, one or at least two environmental sensors. The environmental sensors are sensors for acquiring environmental information. The environmental sensors are, for example, a camera, a microphone, a temperature sensor, a dissolved oxygen sensor, a flow velocity sensor, or the like, but there is no limitation on the type thereof. The environmental information is information regarding the environment. The environment is typically an environment in which fish are cultivated. The environment is, for example, an environment in a fish enclosure, but may be an environment at a location at which a fish enclosure is located. The location at which a fish enclosure is located is, as described above, for example, a location in water such as a sea, a lake, a marsh, or a river, a reservoir on the land, or the like, but may be an environment in a region in which a sea or the like is present. Alternatively, the environment is not limited to such a local environment, but may be considered as encompassing an environment of the entire earth.

The environmental information is, for example, a value of the water temperature, the salinity, the dissolved oxygen amount, the transparency, the flow velocity, or the like, but there is no limitation on the type thereof, as long as it is a physical value, a chemical component, or the like that can be detected by the environmental sensors. The environmental information may be, for example, a value at a current time, or an average in a predetermined period. The period is, for example, one year, three months, or the like, but there is no limitation on the length thereof. The period is, for example, a period to a current time (e.g., recent three months, the current year, etc.), or may be previous predetermined period (e.g., three months up to the previous month, the previous year, etc.). Moreover, the environmental information may be, for example, one of the one or more parameters, which will be described later.

The user terminal 3 is a terminal of a user. The user is, for example, a culturist of fish, but may be another staff member of the organization to which the culturist belongs. The staff member is, for example, a clerk or the like who places an order for food and the like, but there is no limitation on the job type thereof. The terminal is typically a mobile terminal, but may be a desktop PC or the like, but there is no limitation on the location and the type thereof.

It is also possible that the information system is realized, for example, by one automatic feeder 2 and one user terminal 3, or is realized by only one automatic feeder 2, that is, there is no limitation on the configuration thereof. In the case of the former, it is sufficient that a communication module of the automatic feeder 2 can receive a change instruction from the user terminal 3, and the communication module does not have to have a transmitting function. In the case of the latter, the automatic feeder 2 does not have to have a communication module.

Furthermore, it is also possible that the automatic feeder 2 in the case of the former includes, for example, all or some of the later-described constituent element group included in the automatic feeding assistance apparatus 1, whereas the automatic feeder 2 in the case of the latter includes, for example, all or some of the constituent element group included in the user terminal 3.

The automatic feeding assistance apparatus 1 includes a storage unit 11, a processing unit 12, a transmitting unit 13, and an output unit 14. The storage unit 11 includes a supplier information storage unit 111 and a culturist information storage unit 112. The processing unit 12 includes a remaining amount information acquiring unit 121, a judging unit 122, a statistical processing unit 123, a fish status information acquiring unit 124, a parameter acquiring unit 125, and a predicting unit 126. The output unit 14 includes a statistical processing result output unit 141 and a fish status information output unit142.

The automatic feeder 2 includes a feeding storage unit 21, a feeding processing unit 22, a feeding transmitting unit 23, and a feeding receiving unit 24.

The user terminal 3 includes a user storage unit 31, a user receiving unit 32, a user processing unit 33, a user output unit 34, a user accepting unit 35, and a user transmitting unit 36.

Various types of information can be stored in the storage unit 11 constituting the automatic feeding assistance apparatus 1. The various types of information are, for example, later-described supplier information, later-described culturist information, or the like. Other information will be described as appropriate.

One or at least two pieces of supplier information are stored in the supplier information storage unit 111. The supplier information is information for specifying a supplier of food. The supplier information is, for example, an e-mail address of the supplier, but may be an IP address, a URL, or the like for specifying an apparatus of the supplier, or an ID associated with the e-mail address or the like, that is, there is no limitation on the information, as long as it is information with which a supplier of food can be specified. The supplier is, for example, a company (including an organization) that produces or sells food, but may be its shop (including an EC site), and there is no limitation on the type and the location thereof, as long as it can receive an order for food.

For example, it is also possible that one or at least two pieces of food type information are stored in the storage unit 11 respectively in association with the one or more pieces of supplier information stored in the supplier information storage unit 111. The food type information is information indicating the type of food. The type of food may be, for example, the type regarding the form such as raw food, MP, or DP, the type regarding the material such as raw fish or fish powder, or the type regarding the size such as a large, medium, or small size. The food type information is, for example, "raw food", "MP", "DP, fish powder", "EP, fish powder alternative feed", "DP, fish powder, small", or the like, but there is no limitation on the expression format thereof.

It is also possible that the one or more pieces of food type information stored respectively in association with the one or more pieces of supplier information are, for example, information received by the later-described processing unit 12 from a server (unshown) of the supplier specified with the supplier information, and accumulated in the storage unit 11.

Culturist information is stored in the culturist information storage unit 112. The culturist information is information for specifying a culturist of fish. The culturist information is, for example, an e-mail address of the culturist, but may be a mobile phone number of the culturist. The mobile phone number is an address of a short message to the culturist. Alternatively, the culturist information may be an ID of an SNS of the culturist, and there is no limitation on the information, as long as it is information with which a culturist of fish can be specified. The SNS is, for example, LINE (registered trademark), Facebook (registered trademark), or the like, but there is no limitation on the type thereof, as long as it is a social network service that can be used by the culturist.

The processing unit 12 performs various types of processing. The various types of processing are, for example, processing by the remaining amount information acquiring unit 121, the judging unit 122, the statistical processing unit 123, the fish status information acquiring unit 124, the parameter acquiring unit 125, the predicting unit 126, and the like. The various types of processing include various types of determinations and judgments, which will be illustrated in the flowchart.

Furthermore, the processing unit 12 typically has receiving function. That is to say, for example, the processing unit 12 receives remaining amount information, fish status information, parameters, and the like from the automatic feeder 2. For example, the processing unit 12 receives data from an artificial satellite as well. Moreover, for example, the processing unit 12 can receive ordering information for placing an order for food, from the user terminal 3.

Moreover, for example, the processing unit 12 can perform processing regarding control of the feeding amount or the feeding time by the automatic feeder 2, using a prediction result by the predicting unit 126. The processing regarding control may be, for example, processing in which the control of the feeding amount or the feeding timing based on the prediction result is performed by the processing unit 12, or processing in which a prediction result is transmitted to an automatic feeder 2 that can perform this sort of control based on the information from an external apparatus.

The control of the feeding amount or the feeding timing based on the prediction result is, for example, changing the feeding amount or the feeding timing that is set for the automatic feeder 2 in advance or at a current time, using the prediction result. That is to say, for example, the processing unit 12 can change the feeding amount or the feeding timing that is set for the automatic feeder 2 in advance or at a current time, using the prediction result acquired by the predicting unit 126.

The remaining amount information acquiring unit 121 acquires remaining amount information. The remaining amount information is information regarding the remaining amount of food. The remaining amount is the amount of food remaining in the automatic feeder 2. The information regarding the remaining amount is, for example, the remaining amount, but may be the consumed amount. The consumed amount is the amount of food introduced from the automatic feeder 2 to the fish enclosure. The consumed amount is, for example, a result obtained by subtracting the remaining amount from the predetermined amount. The predetermined amount is, for example, the amount of food that can be accommodated in a vessel included in the automatic feeder 2 (hereinafter, it may be referred to as a capacity).

For example, the remaining amount information acquiring unit 121 acquires a remaining amount, using the information output from the remaining amount sensor, and acquires remaining amount information containing the remaining amount.

Furthermore, for example, the remaining amount information acquiring unit 121 holds capacity information. The capacity information is information indicating the capacity as described above. For example, it is also possible that the remaining amount information acquiring unit 121 acquires a remaining amount, using the information output from the remaining amount sensor, subtracts the remaining amount from the capacity indicated by the capacity information, thereby acquiring the consumed amount, and further acquiring remaining amount information containing one or both of the remaining amount and the consumed amount.

The remaining amount information may contain, for example, one or both of the remaining amount and the consumed amount, and the time. The time is a time at which the remaining amount or the consumed amount is acquired.

Specifically, for example, the remaining amount information acquiring unit 121 holds timing information. The timing information is information regarding timing for acquiring the remaining amount information. The timing information is, for example, a group of one or at least two times, but may be a cyclic period. For example, the remaining amount information acquiring unit 121 acquires the remaining amount or the consumed amount, using the information output from the remaining amount sensor, in a case in which the current time acquired from a clock built in the MPU, an NTP server, or the like (hereinafter, it may be simply referred to as a time) satisfies a predetermined relationship with the timing information, and acquires remaining amount information containing the time, and the remaining amount or the consumed amount.

The case in which a predetermined relationship is satisfied is, for example, a case in which the acquired time matches any of the one or more times constituting the timing information, but may be a case in which the time elapsed after the previous acquisition matches the cyclic period indicated by the timing information.

The remaining amount sensor is, for example, distance sensor such as a laser sensor as described above, and the information from the remaining amount sensor in this case is distance data.

The distance data is, for example, information indicating the distance from a distance sensor provided at the upper face in the rectangular vessel to the surface of food in the vessel. For example, the remaining amount information acquiring unit 121 acquires, as the remaining amount, a value obtained by subtracting the distance information from the height of the vessel (i.e., the distance from the bottom face to the upper face of the vessel), and multiplying the area of the base of the vessel by the subtraction result, but may acquire the subtraction result as a numeric value corresponding to the remaining amount.

Furthermore, for example, the remaining amount information acquiring unit 121 may acquire distance data as a numeric value corresponding to the consumed amount as described above, or may acquire a multiplication result obtained by multiplying the area of the base of the vessel by the distance information, as the consumed amount.

The information from the remaining amount sensor may be, for example, weight data from a weight sensor provided at the bottom face of the vessel. The weight data is information regarding the weight of food. For example, the remaining amount information acquiring unit 121 holds capacity data indicating the capacity of the vessel and the specific gravity data indicating the specific gravity of food in the vessel, and acquires a division result obtained by multiplying the capacity indicated by the capacity data by the specific gravity indicated by the specific gravity data. Next, the remaining amount information acquiring unit 121 may divide the weight data from the weight sensor by the acquired multiplication result, and acquire the division result as the consumed amount.

Furthermore, the information from the remaining amount sensor may be, for example, data from one or at least two infrared sensors provided at the side face of the vessel. The one or more infrared sensors are each constituted by a light-emitting element and a light-receiving element. For example, one or more light-emitting elements are arranged in a line along the vertical direction on the side face in the vessel, and one or more light-emitting elements are arranged in a line along the vertical direction so as to correspond to the light-emitting elements. For example, each of the one or more light-receiving elements outputs light-receiving data indicating "receiving of light" only during a period in which infrared rays are received from the light-emitting element corresponding to the light-receiving element. For example, it is also possible that the remaining amount information acquiring unit 121 holds the number of light-receiving elements in the vessel, divides the number of points of light-receiving data received from one or more light-receiving elements by the number of light-receiving elements, and acquires the division result as the consumed amount. Note that there is no limitation on the data structure and the acquiring method of the remaining amount information. The remaining amount information may also be one of the one or more parameters, which will be described later.

The remaining amount information acquiring unit 121 typically receives remaining amount information that is paired with a device identifier, from each of the one or at least two automatic feeders 2. The device identifier is information for identifying an automatic feeder 2. The device identifier is, for example, an IP address, a MAC address, an ID, or the like, but may be positional information, that is, there is no limitation on the information, as long as it is information with which an automatic feeder 2 can be identified. The positional information is information indicating the position of an automatic feeder 2. The positional information is, for example, the coordinates such as (latitude, longitude), but there is no limitation on the data format thereof. Note that, for example, if the automatic feeding assistance apparatus 1 is a constituent part of an automatic feeder 2, the remaining amount information acquiring unit 121 may accept delivery of remaining amount information from the automatic feeder 2.

The judging unit 122 judges whether or not the remaining amount of food acquired by the remaining amount information acquiring unit 121 is so small that a predetermined condition is satisfied by the remaining amount information. The condition is, for example, a condition regarding the remaining amount, but may be a condition regarding the consumed amount. That is to say, the condition is, for example, "remaining amount ≤ threshold value" indicating that the remaining amount is smaller than, or is smaller than or equal to a threshold value, but may be "consumed amount ≥ threshold value" indicating that the consumed amount is larger than, or is larger than or equal to a threshold value. Note that the equal sign "=" may be omitted.

Furthermore, the condition may be, for example, "period ≤ first threshold value, predicted remaining amount ≥ threshold value" indicating that the predicted remaining amount is smaller than, or is smaller than or equal to a threshold value during a predetermined period. The predicted remaining amount is, for example, a group of pairs each constituted by the remaining amount and the time, calculated from the remaining amount and the predicted information, but there is no limitation on the expression format thereof. Alternatively, the condition may be "period ≤ first threshold value, the predicted consumed amount ≥ threshold value" indicating that the predicted consumed amount is larger than, or is larger than or equal to a threshold value during a predetermined period. The predicted consumed amount is a group of pairs each constituted by the consumed amount and the time, calculated from the consumed amount and the predicted information, but there is no limitation on the expression format thereof. The judging unit 122 typically performs judgment for each of the one or at least two device identifiers as described above.

The statistical processing unit 123 performs statistical processing on the two or more pieces of remaining amount information, thereby acquiring a statistical processing result. The two or more pieces of remaining amount information that are subjected to statistical processing by the statistical processing unit 123 are typically two or more pieces of remaining amount information received from two or more automatic feeders 2. The statistical processing is, for example, processing that obtains the total of two or more remaining amounts, but may be processing that obtains the total of two or more consumed amounts. Alternatively, the statistical processing may be processing that obtains a representative value such as an average or a median of two or more remaining amounts or the like, or may be processing that obtains distribution (e.g., variance, standard deviation, etc.) of two or more remaining amounts or the like.

Note that those that are subjected to statistical processing may be two or more pieces of remaining amount information received from one automatic feeder 2. The statistical processing in this case is, for example, processing that obtains the total of two or more consumed amounts. Alternatively, the statistical processing may be processing that obtains a representative value such as an average or a median of two or more consumed amounts, or may be processing that obtains distribution of two or more consumed amounts or the like.

Specifically, for example, price information is stored in the storage unit 11. The price information is information regarding the price of food. The price information is, for example, a group of pairs each constituted by food type information and a unit price. The unit price is the price per unit amount, and the unit amount is, for example, 1 kg, one bag, or the like. A pair of the food type information and the unit price is, for example, "raw food, 1000 yen/kg", "MP, 2000 yen/bag", or the like.

For example, the statistical processing unit 123 obtains a food cost corresponding to the consumed amount for each of two or more automatic feeders 2, using the price information and two or more pieces of remaining amount information received from the two or more automatic feeders 2 as described above, and acquires food cost of the automatic feeders 2. The statistical processing unit 123 may obtain the total of the thus obtained two or more costs, thereby acquiring the total food cost of the two or more automatic feeders 2.

Furthermore, the statistical processing may be, for example, processing that obtains the total consumed amount of food or the total remaining amount of food in each of one or at least two regions.

Specifically, for example, a group of pairs each constituted by a device identifier and a region identifier is stored in the storage unit 11. The region identifier is information for identifying a region. The region identifier is, for example, a region name, but may be an ID, that is, there is no limitation on the information, as long as it is information with which a region can be identified. For example, the statistical processing unit 123 may totalize two or more pieces of remaining amount information received by the remaining amount information acquiring unit 121 from two or more automatic feeders 2, for each of one or more region identifiers, thereby obtaining the total consumed amount of food in each region.

Furthermore, the statistical processing may be, for example, processing that obtains a change in the consumed amount of food or the like per unit period. The unit period is, for example, one day, but may be, for example, one week, one month, or the like, or may be one hour from a predetermined time, in one day, or the like, that is, there is no limitation on the length thereof. The consumed amount of food or the like per unit period (hereinafter, it may be referred to as a "unit period consumed amount or the like") may be, for example, the unit period consumed amount or the like in each of one or more automatic feeders 2, the total of the unit period consumed amounts or the like in each of one or more regions, or the total of the unit period consumed amounts or the like in all of the one or more automatic feeders 2.

The processing that obtains a change may be, for example, processing that judges whether the change is an increase or a decrease. For example, the statistical processing unit 123 may judge whether the unit period consumed amount in one or more automatic feeders 2 increases or decreases, using two or more pieces of remaining amount information received from the automatic feeders 2, thereby acquiring the judgment result. It is also possible that the thus acquired judgment result is delivered, for example, in a pair with a device identifier to the transmitting unit 13, and the transmitting unit 13 advances the timing for transmitting ordering information regarding the automatic feeders 2 (or increases the order amount in the ordering information) if the judgment result indicates "increase", and delays the timing for transmitting ordering information regarding the automatic feeders 2 (or decreases the order amount in the ordering information) if the judgment result indicates "decrease". It is possible to accurately handle a change in the consumed amounts of food and the like in one or more automatic feeders 2, by obtaining a change in the unit period consumed amount or the like in the automatic feeders 2, and changing the timing for transmitting ordering information regarding the automatic feeders 2 (or the order amount) in this manner.

Furthermore, it is also possible that, for example, the statistical processing unit 123 acquires a change rate of the total consumed amount of food (hereinafter, "total amount change rate") for each of two or more pieces of food type information, and delivers it in a pair with the food type information to the transmitting unit 13. The transmitting unit 13 may change the timing for transmitting ordering information (or the order amount) according to the total amount change rate that is paired with the food type information, for each of two or more pieces of food type information.

Specifically, it is also possible that, for example, the timing for transmitting ordering information for food whose total amount change rate is positive is advanced, for example, by the time corresponding to the absolute value of the total amount change rate (or the order amount in the ordering information is increased, for example, by the amount corresponding to the absolute value of the total amount change rate), and the timing for transmitting ordering information for food whose total amount change rate is negative is delayed, for example, by the time corresponding to the absolute value of the total amount change rate (or the order amount in the ordering information is decreased, for example, by the amount corresponding to the absolute value of the total amount change rate). It is possible to accurately handle a change in the prices of various types of food, by obtaining a change in the total amount change rate for each of two or more types of food, and changing the timing for transmitting ordering information (or the order amount) according to the total amount change rate in this manner.

Furthermore, for example, the parameter acquiring unit 125 acquires component information regarding components of food (e.g., the protein content "X g in 100 g", etc.) as described above from a server or the like of a manufacturer of the food, and the statistical processing unit 123 obtains the various component amounts corresponding to the consumed amount of food, for each of two or more automatic feeders 2, using the two or more pieces of remaining amount information received from the two or more automatic feeders 2 and the component information acquired by the parameter acquiring unit 125. For example, if the consumed amount of food in an automatic feeder 2 is "100 kg", the amount of protein "X kg" in food "100 kg" consumed in the automatic feeder 2 is determined by multiplying "100 kg" by "X/100" corresponding to the protein content. The statistical processing unit 123 may totalize two or more component amounts obtained for each of the two or more automatic feeders 2 in this manner, thereby obtaining the total of the various component amounts (e.g., the total protein amount, etc.) corresponding to the total consumed amount of food in the two or more automatic feeders 2.

The fish status information acquiring unit 124 acquires fish status information. The fish status information is information regarding a status of fish that are being cultivated. The fish that are being cultivated are fish that are in each of one or at least two fish enclosures. The status of fish is, for example, the type of fish, the number of fish that are to be brought to the market, or the like. The type of fish is the type of fish that are in a fish enclosure. The fish that are to be brought to the market are, for example, one or more fish whose size has reached or exceeded the size at which the fish can be shipped to the market, out of one or at least two fish that are in a fish enclosure (hereinafter, a school of fish), but may be all schools of fish in the fish enclosure. Note that the status of fish may be, for example, the health state of fish or the like, and there is no limitation on the status of fish that are being cultivated.

The fish status information includes, for example, one or both of fish type information and number information. The fish type information is information indicating the type of fish. The fish type information is, for example, a type name such as "sea bream" or "young yellowtail", but may contain information regarding a size such as "M" or "extra-large". Alternatively, the fish status information may be, for example, an ID or the like associated with a type name or the like, and there is no limitation on the information, as long as it is information that can indicate the type of fish.

The number information is information regarding the number of fish that are to be brought to the market. The number information is, for example, the number of fish such as "100 fish" or "5000 fish", but may be the weight such as "20 kg" or "1t" corresponding to the number of fish, and there is no limitation on the expression format thereof.

The fish status information acquiring unit 124 typically acquires fish status information, using the remaining amount information acquired by the remaining amount information acquiring unit 121, but may acquire fish status information, using one or more types of the environmental information from the environmental sensors and the weather information and the image information from the artificial satellites as described above, instead of or in addition to the remaining amount information.

It is preferable that, for example, the fish status information acquiring unit 124 acquires a time-series change in the remaining amount using two or more pieces of remaining amount information acquired by the remaining amount information acquiring unit 121 from one automatic feeder 2, and acquires fish status information based on the time-series change.

Specifically, for example, the fish status information acquiring unit 124 holds a first function that is an increase function in which a value indicating time-series change in the remaining amount (e.g., a food decreasing velocity "2 kg/day" indicating the velocity at which food decreases, etc.) is taken as a variable, for each of one or more pieces of fish type information. The fish status information acquiring unit 124 obtains a food decreasing velocity from two or more pieces of remaining amount information acquired by the remaining amount information acquiring unit 121 from one automatic feeder 2. For example, a fish type information group, which is a group that is paired with a device identifier and fish type information, is stored in the storage unit 11. The fish status information acquiring unit 124 acquires fish type information (e.g., "sea bream") that is paired with a device identifier for identifying the one automatic feeder 2, using the fish type information group. Then, the fish status information acquiring unit 124 substitutes the food decreasing velocity for the first function corresponding to the fish type information, thereby acquiring number information (e.g., "100 fish"), and further acquiring fish status information (e.g., "sea bream, 100 fish") containing the fish type information and the number information.

In order to acquire fish status information, the fish status information acquiring unit 124 may hold one or more pieces of first correspondence information that are similar to the one or more first functions as described above, instead of the first functions. The first correspondence information is, for example, a group of pairs each constituted by a food decreasing velocity and number information. A pair of a food decreasing velocity and number information is, for example, a pair of the food decreasing velocity "10 kg/day" and "100 fish", a pair of the food decreasing velocity "15 kg/day" and "140 fish", or the like.

Furthermore, it is more preferable that, for example, the fish status information acquiring unit 124 acquires fish status information also considering the environmental information from the environmental sensors, the weather information from the artificial satellites, or the like, based on the time-series change acquired as described above.

Specifically, for example, the fish status information acquiring unit 124 holds number correcting information as well. The number correcting information is information for correcting the number information acquired based on a time-series change in the remaining amount, according to the environmental information from the environmental sensors. The number correcting information is, for example, a group of pairs each constituted by an average water temperature and a correction value. A pair of an average water temperature and a correction value is, for example, a pair of the average water temperature "lower than 15 degrees" and the correction value "-5", a pair of the average water temperature "15 degrees or higher and lower than 20" and the correction value "±0", a pair of the average water temperature "higher than 15 degrees" and the correction value "+3", or the like. For example, if the average water temperature based on information during recent three months from a temperature sensor is "13 degrees", the fish status information acquiring unit 124 acquires a correction value "-5" that is paired with the average water temperature "lower than 15 degrees" corresponding to "13 degrees", using the number correcting information, and adds the correction value to the number information "100 fish" acquired as described above, thereby acquiring corrected number information "95 fish". Examples of the number correcting information that can be acquired by environmental sensors include, in addition to the average water temperature, a sunshine duration and a tidal current, and there is no limitation on the type thereof, as long as it is data that can be acquired by environmental sensors.

Thus, it is possible for the fish status information acquiring unit 124 to precisely acquire fish status information regardless of a change in the environment, as a result of correction of the velocity at which the remaining food decreases, using environmental data from artificial satellites and the like in this manner.

For example, the fish status information acquiring unit 124 holds such a first function or first correspondence information in advance, but may acquire or update them employing artificial intelligence such as machine learning.

Machine learning may be said to be, for example, an approach for performing analysis using, as an input, a data group acquired from environmental sensors, artificial satellites, or the like, a rule, a criterion, or the like is extracted from the data group, thereby developing an algorithm of the analysis. Machine learning is applied to various analysis techniques that perform analysis through statistical information processing. Examples of artificial intelligence other than machine learning include techniques such as pattern recognition and automatic deduction. Artificial intelligence such as machine learning, and various analysis techniques using the same are known, and thus a detailed description thereof has been omitted.

It is also possible that, for example, the fish status information acquiring unit 124 detects an area in which fish are present, based on a moving image from a camera, using an image analysis technique employing artificial intelligence such as machine learning, and estimates the number of fish. For example, it is also possible that the fish status information acquiring unit 124 detects the coordinates at which fish are present, based on acoustic data from a microphone, using acoustic analysis technique employing artificial intelligence such as machine learning, and estimates the number of fish. Moreover, it is also possible that, for example, the fish status information acquiring unit 124 acquires the number of fish and a behavioral pattern in a portion of a fish enclosure, based on data acquired by an environmental sensor for that portion, and estimates the number of fish in the entire fish enclosure using an analysis technique employing artificial intelligence such as machine learning.

Thus, it is possible for the fish status information acquiring unit 124 to more precisely acquire fish status information such as the number of fish, by employing artificial intelligence such as machine learning in this manner. The artificial intelligence such as machine learning is applicable, for example, also to processing that is performed by the judging unit 122, the statistical processing unit 123, the parameter acquiring unit 125, the predicting unit 126, and the like.

The parameter acquiring unit 125 acquires one or more parameters regarding a movement of a fish. The parameters regarding a movement of a fish may be, for example, a parameter indicating a movement of a fish, or may be a parameter that may affect a movement of a fish. The parameter in the case of the former is, for example, the swim amount of a school of fish, and the parameter in the case of the latter is, for example, the above-described environmental information. The above-described remaining amount information is the parameter in the case of the latter, but may be considered as the parameter in the case of the former.

The operation that acquires a parameter is, for example, an operation that receives information such as environmental information and remaining amount information, which is a parameter value, from one or more of the sensors such as environmental sensors and remaining amount sensors, or an operation that accepts delivery of the information.

Furthermore, the operation that acquires a parameter may be an operation that performs calculation using one or more pieces of information received or accepted from one or more sensors, thereby acquiring a calculation result. Specifically, for example, the parameter acquiring unit 125 calculates an average of water temperatures using two or more pieces of temperature information from a temperature sensor, thereby acquiring an average water temperature. The parameter acquiring unit 125 may calculate an average of dissolved oxygen amounts using two or more pieces of dissolved oxygen information from a dissolved oxygen sensor, thereby acquiring an average dissolved oxygen.

Furthermore, it is also possible that the parameter acquiring unit 125 receives information from an artificial satellite, thereby acquiring one or more parameters. The information from an artificial satellite may be a parameter itself, or information containing a parameter or information with which a parameter can be acquired. The information containing a parameter or information with which a parameter can be acquired is, for example, the above-described weather information, the above-described image information, or the like, but there is no limitation on the type thereof.

Specifically, for example, the parameter acquiring unit 125 acquires a parameter such as an average seawater temperature of a sea area in which an automatic feeder 2 is present, an oceanic current of the sea area, the amount of water vapor in the sky above the sea area, a seawater temperature distribution on a global scale, an oceanic current on a global scale, a water vapor distribution on a global scale, or the like, using the received weather information. For example, it is also possible that the parameter acquiring unit 125 acquires a parameter such as whether or not a red tide has occurred or the scale thereof in a sea area in which an automatic feeder 2 is present, the color of seawater in the sea area, or the like, using the received image information.

Furthermore, for example, the parameter acquiring unit 125 detects a feature point such as a mouth, eyes, and a caudal fin from an image captured by one or at least two cameras, and acquires the number of fish in a school of fish, the density, the size of each of two or more fish, the average size of two or more fish, or the like, using the detection result.

The number of fish can be acquired, for example, by counting the number of feature points such as mouths. The density can be acquired, for example, by dividing the number of fish by the volume of the fish enclosure. The size of each fish can be acquired, for example, using information such as the distance between two feature points corresponding to a mouth and a caudal fin contained in an image of each of two or more fish included in images from one camera, and the distance from the one camera to the fish. The distance from the one camera to the fish can be calculated, for example, based on angular parallax between images from two or more cameras including the one camera. The average size can be acquired by dividing the total of the sizes of two or more fish by the number of fish.

Moreover, for example, the parameter acquiring unit 125 acquires a movement amount of each of one or more fish, using two or more detection results acquired at different times, and totalizes the one or more movement amounts, thereby acquiring the swim amount of the school of fish. The movement amount is a distance by which a fish moves in a unit time. The unit time is, for example, one second, but may be one minute or the like, and there is no limitation on the length of the time. The movement amount of a fish is calculated, for example, as a moving distance of one feature point contained in the image of the fish. The feature point is, for example, a point corresponding to the front end of the snout, but may be a point corresponding to the rear end of the caudal fin, a point corresponding to the center of an eye, or the like, and a point corresponding to any portion of the fish may be used.

Furthermore, the movement amount of a fish may be, for example, a fish body velocity. The fish body velocity is a non-dimensional velocity (e.g., v/L [fish length/s]) obtained by dividing the movement velocity of a fish (e.g., v [m/s]) by the length of the fish (e.g., L [m/fish length]). The length of a fish is, for example, a fork length. The fork length is a distance from the front end of the snout to the recessed outer edge at the center of the caudal fin where the fin is forked (e.g., a point that is recessed most). Alternatively, the length of a fish may be, for example, the standard length or the total length, and there is no limitation on the type thereof. The standard length is a length from the front end of the snout to the base of the caudal fin, and the total length is length from the front end of the snout to the rear end of the caudal fin.

Specifically, for example, in an image of a fish that is swimming, a point (e.g., a front end) of the snout is taken as a start point, a point (e.g., the above-described point that is recessed most) of the caudal fin is taken as an end point, and the distance from the start point to the end point is defined as "one fish body". Moreover, if the coordinates of the start point is taken as (A, B) and the time it takes for the end point to reach the coordinates (A, B) is defined as "time (T) necessary to advance by one fish body", the fish body velocity is calculated as an inverse number (1/T) of the time.

The parameter acquiring unit 125 detects an area corresponding to one fish from an image captured in a fish enclosure, and specifies, for example, a start point corresponding to the front end of the snout and an end point corresponding to the point that is recessed most in the caudal fin. Next, the parameter acquiring unit 125 acquires the coordinates of the start point, and starts a timer. Then, the parameter acquiring unit 125 starts an operation that judges whether or not the end point has reached the coordinates of the start point, and stops the timer upon judging that the end point has reached the coordinates of the start point. Subsequently, the parameter acquiring unit 125 reads a value T or the timer, and calculates an inverse number of the value T, thereby acquiring a fish body velocity (1/T) of the fish.

Furthermore, it is also possible that, for example, the parameter acquiring unit 125 obtains the distance from the start point to the end point (i.e., "one fish body") in an image at a time t as described above, obtains the moving distance of one feature point (e.g., the start point) between the image at the time t and an image at a time (t+Δt), and divides the moving distance by Δt, thereby calculating the movement velocity, and, furthermore, divides the movement velocity by "one fish body", thereby acquiring the fish body velocity.

For example, it is also possible that the parameter acquiring unit 125 performs the above-described processing on each of two or more fish in one fish enclosure, thereby acquiring the fish body velocity of each fish. The parameter acquiring unit 125 may totalize the thus acquired one or at least two fish body velocities, thereby acquiring the swim amount of the school of fish in the fish enclosure. Moreover, the parameter acquiring unit 125 may divides the acquired swim amount of the school of fish by the number of fish, thereby acquiring the average fish body velocity in the fish enclosure.

If the thus acquired fish body velocity is used, it is possible to relatively compare movements of fish with different sizes or fish whose distances from a camera are different, in the same fish enclosure. It is also possible to compare movements of fish or schools of fish between different fish enclosures. Moreover, for example, since the swim amount of a school of fish changes in accordance with the growth of each fish even in the same fish enclosure, it is typically difficult to compare the swim amounts at different times, but it is possible to compare the swim amounts at different times by using such fish body velocities.

Accordingly, it is possible for the later-described predicting unit 126 to acquire a prediction result, which is a result obtained by predicting one or both of the feeding amount and the feeding time, using the fish body velocity acquired by the parameter acquiring unit 125, without depending on the size of the fish.

For example, the parameter acquiring unit 125 may acquire a parameter through fish behavior analysis. The fish behavior analysis is, for example, an approach for analyzing a fish behavior using an image from a camera, the environmental information from an environmental sensor, information from an artificial satellite, or the like. The fish behavior analysis is known, and thus a detailed description thereof has been omitted. It is also possible that the parameter acquiring unit 125 acquires one or more parameters indicating a movement of a fish, using an analysis result through fish behavior analysis.

The predicting unit 126 acquires a prediction result. The prediction result is a result obtained by predicting one or both of the feeding amount and the feeding time, using one or more parameters. The prediction result may be, for example, a prediction result by a user. The prediction result by a user may be said to be information obtained by transforming a result logically or empirically derived by a user using one or more parameters, into a computer-processable form.

The prediction result by a user is, for example, a change instruction. Although described later in detail, the change instruction is an instruction that is given by a user after predicting one or both of a preferable feeding amount and a preferable feeding timing using one or more parameters output to the user terminal 3, and that is to change one or both of the feeding amount and the feeding timing that are set for the automatic feeder 2 in advance or at a current time, based on the prediction result. For example, it is also possible that the user terminal 3 accepts the change instruction, and transmits it to the automatic feeding assistance apparatus 1, and the predicting unit 126 receives the change instruction transmitted from the user terminal 3, as a prediction result.

In particular, the change instruction may contain, for example, one or both of feeding amount change information and feeding timing change information. The feeding amount change information and the feeding timing change information will be described later.

Furthermore, the change instruction may contain, out of a pair of an original feeding amount and a new feeding amount constituting the feeding amount change information, the new feeding amount, or may contain a result obtained by subtracting the original feeding amount from the new feeding amount.

Furthermore, the change instruction may contain, out of a pair of an original feeding timing and a new feeding timing constituting the feeding timing change information, the new feeding timing, or may contain a result obtained by subtracting the original feeding timing from the new feeding timing.

Alternatively, the change instruction may contain, for example, a feeding amount per feeding and one or at least two feeding times in one day. Each of the feeding amount and the one or more feeding times is a value that is judged by a user as being preferable based on the one or more parameters, and is input. In this prediction result, the one or more feeding times may be replaced by, for example, a cyclic period for feeding, the number of times for feeding per day, or the like. Alternatively, the prediction result may be a group of pairs each constituted by the feeding amount and the feeding time.

Furthermore, the prediction result may be a prediction result by the predicting unit 126 (i.e., a result acquired by a computer performing calculation using one or more parameters). That is to say, for example, the predicting unit 126 can predict one or both of the feeding amount and the feeding time, using the one or more parameters acquired by the parameter acquiring unit 125, thereby acquiring a prediction result. For example, the predicting unit 126 may predict the type of food that is suited for fish in a fish enclosure provided with the automatic feeder 2, using the one or more acquired parameters, thereby acquiring a prediction result.

For example, the predicting unit 126 holds a second function in which one or more parameters are taken as input, and the feeding amount or the feeding timing is taken as output, where the feeding amount or the feeding timing is predicted by substituting one or more parameters acquired by the parameter acquiring unit 125 for the second function.

Furthermore, it is also possible that the predicting unit 126 holds second correspondence information, which is a group of pairs each constituted by a set of one or more values that can be taken by one or more parameters, and the feeding amount or the feeding timing, where the feeding amount or the feeding timing corresponding to the one or more parameters acquired by the parameter acquiring unit 125 is acquired using the second correspondence information.

For example, the predicting unit 126 holds such a second function or second correspondence information in advance, but may acquire or update them employing artificial intelligence such as machine learning.

Specifically, for example, since the fish body velocity is high when a fish is hungry, and the closer the fish is to full, the lower the fish body velocity, for example, the predicting unit 126 may acquire information (e.g., a learning device) indicating a relationship between the fish body velocity and the feeding end timing, through an analysis approach such as machine learning, using two or more fish body velocities regularly or irregularly acquired by the parameter acquiring unit 125 during feeding by the automatic feeder 2, and feeding amounts at the times at which the two or more fish body velocities were acquired.

Subsequently, the predicting unit 126 may predict a feeding end timing, from two or more fish body velocities acquired by the parameter acquiring unit 125 during the next and subsequent feeding, using information such as a learning device acquired as described above. For example, the predicting unit 126 may accumulate and compare fish body velocities acquired in time periods during which feeding is not performed, thereby acquiring a daily average. If the thus acquired daily average of the fish body velocity is higher than that of the previous day, the predicting unit 126 may predict an increase in the feeding amount for the next feeding time. Accordingly, it is possible to increase the level of precision in automatically placing an order for food.

The transmitting unit 13 transmits various types of information. The various types of information are, for example, ordering information. The ordering information is information regarding placing an order for food. The ordering information is typically information for placing an order for food. The ordering information contains, for example, order amount information and orderer information. The order amount information is information regarding the amount of food for which an order is to be placed. The order amount information may be, for example, the weight such as "50 kg", or the quantity such as "20 bags".

The order amount information may be, for example, the above-described capacity information. In this case, a capacity information group, which is a group of pairs each constituted by a device identifier and capacity information, may be stored in the storage unit 11.

Furthermore, the ordering information may contain one or at least two pieces of food type information.

Furthermore, the ordering information may contain, for example, a group of pairs each constituted by food type information and amount information, and orderer information. A pair of food type information and amount information is, for example, a pair of the food type information "raw food" and the amount information "10 kg", a pair of the food type information "MP" and the amount information "5 bags", or the like.

The orderer information is information regarding an orderer. The orderer is a user described above. That is to say, the orderer is, for example, a culturist, but may be an organization to which the culturist belongs, or other staff members of the organization. The orderer information contains, for example, one or more types of information of an address, a name, an organization name, a telephone number, an e-mail address, and a URL.

Note that the ordering information may be information that prompts a user to place an order for food. This sort of ordering information is, for example, information indicating that "Please place an order for food.", but may be information indicating that "Please place an order for raw food." or the like containing the food type information, or may be information indicating that "Please place an order for 10 bags of DP." or the like containing the food type information and the amount information. This sort of ordering information may contain, for example, attention-calling information. The attention-calling information is information for calling for the attention of a user. The attention-calling information is, for example, information indicating that "We are running out of food." or "The remaining amount of raw food is for 2 days". The ordering information that prompts a user to place an order for food is, for example, a character string, but may be a mark, a symbol, or the like indicating similar meanings, and there is no limitation on the expression format thereof.

If the judging unit 122 judges that the remaining amount of food is so small that the predetermined condition is satisfied, the transmitting unit 13 transmits the ordering information.

For example, assuming that ordering information is stored in the storage unit 11, if the judging unit 122 judges that the remaining amount of food is so small that a predetermined condition is satisfied, the transmitting unit 13 acquires the ordering information from the storage unit 11, and transmits the information.

Furthermore, it is also possible that, assuming that two or more pieces of ordering information are stored in the storage unit 11, if the judging unit 122 judges that the remaining amount of food is so small that one condition, out of predetermined one or at least two conditions, is satisfied, the transmitting unit 13 acquires the ordering information corresponding to the one condition from the storage unit 11, and transmits the information.

Furthermore, an ordering information group, which is a group of pairs each constituted by a device identifier and an ordering information, may be stored in the storage unit 11. The ordering information in this case may contain, for example, capacity information that is paired with the device identifier. It is preferable that, if the judging unit 122 judges, for one of two or more automatic feeders 2, that the remaining amount of food is so small that the predetermined condition is satisfied, the transmitting unit 13 acquires ordering information that is paired with a device identifier for identifying the one automatic feeder 2, from the storage unit 11, and transmits the information.

For example, the transmitting unit 13 transmits the ordering information acquired from the storage unit 11 as described above, to the supplier specified with the supplier information in the supplier information storage unit 111.

Furthermore, it is also possible that, if the judging unit 122 judges that the remaining amount of food is so small that the predetermined condition is satisfied, the transmitting unit 13 transmits the ordering information that prompts for placing an order for food, to the culturist specified with the culturist information in the culturist information storage unit 112. For example, if the culturist who has browsed this ordering information inputs the ordering information for placing an order for food, via an input device of the user terminal 3, which will be described later, the input ordering information is transmitted from the user terminal 3 to the automatic feeding assistance apparatus 1 or the supplier. The ordering information thus transmitted from the user terminal 3 is, for example, received by the processing unit 12 of the automatic feeding assistance apparatus 1, and the transmitting unit 13 transmits the received ordering information to the supplier specified with the supplier information in the supplier information storage unit 111.

The output unit 14 outputs various types of information. The various types of information are, for example, a statistical processing result, the fish status information, or the like. For example, the output unit 14 outputs one or more parameters acquired by the parameter acquiring unit 125 as well.

The output by the output unit 14 is typically transmission to the user terminals 3, but may be, for example, output via an output device such as display on a display screen, output of a sound from a speaker, or printing by a printer, may be accumulation in a storage medium, or may be delivery of a processing result to another function or another program. The same applies to the statistical processing result output unit 141 and the like.

The statistical processing result output unit 141 outputs the statistical processing result acquired by the statistical processing unit 123. The statistical processing result that is output does not have to have the same data format as the acquired statistical processing result. The statistical processing result output unit 141 outputs the statistical processing result acquired by the statistical processing unit 123, for example, in the form of a table or a diagram, but may output the result in the text format. The same applies to one or more parameters acquired by the parameter acquiring unit 125.

Accordingly, it is possible for a user to see the acquired statistical processing result and one or more parameters and to determine a preferable feeding amount or feeding time, and to accurately change one or both of the feeding amount and the feeding timing that are set for the automatic feeder 2 in advance or at a current time. The changing settings may be considered as encompassing a case of performing settings for the first time. The operation that changes settings will be described later.

The fish status information output unit142 outputs the fish status information acquired by the fish status information acquiring unit 124. The fish status information that is output does not have to have the same data format as the acquired fish status information. The fish status information output unit 142 outputs the fish status information acquired by the fish status information acquiring unit 124, for example, in the text format, but may output the information in the form of a table or a diagram.

Accordingly, it is possible for a user to see the acquired fish status information and to ship a preferable amount of fish.

For example, a device identifier, fish type information, feeding amount information, timing information, and the like are stored in the feeding storage unit 21 constituting the automatic feeder 2. The fish type information that is stored indicates, for example, the type of fish that are cultivated in a fish enclosure provided with the automatic feeder 2. The feeding amount information is information indicating the feeding amount that is set in advance or at a current time. The timing information is information regarding the feeding timing that is set in advance or at a current time, and may be the same as, for example, the timing information regarding timing for acquiring the above-described remaining amount information. One or both of the feeding amount information that is stored and the timing information that is stored may be, for example, changed by the processing unit 12 using the prediction result information acquired by the predicting unit 126.

For example, the feeding processing unit 22 acquires remaining amount information using the remaining amount sensor. For example, the feeding processing unit 22 acquires environmental information using the environmental sensor. The method for acquiring the remaining amount information and the environmental information are as described above, and thus a description thereof will not be repeated.

For example, if the feeding receiving unit 24 receives a change instruction from the user terminal 3, the feeding processing unit 22 changes settings regarding one or both of the feeding amount and the feeding time.

The change instruction is an instruction to change one or both of the feeding amount and the feeding timing that are set in advance or at a current time. The change instruction contains, for example, one or both of feeding amount change information and feeding timing change information. The feeding amount change information is information for changing the feeding amount. The feeding amount change information may be, for example, a pair of an original feeding amount and a new feeding amount, or may be a result (including a plus or minus sign) obtained by subtracting the original feeding amount from the new feeding amount. The feeding timing change information is information for changing the feeding timing. The feeding amount change information may be, for example, a pair of an original feeding timing and a new feeding timing, or may be a result (including a plus or minus sign) obtained by subtracting the original feeding timing from the new feeding timing.

The feeding transmitting unit 23 transmits various types of information. The various types of information are, for example, the remaining amount information acquired by the feeding processing unit 22, the environmental information acquired by the feeding processing unit 22, or the like. The feeding transmitting unit 23 typically transmits information such as the acquired remaining amount to the automatic feeding assistance apparatus 1, but may transmit the information, for example, to another apparatus such as the user terminals 3.

For example, the feeding receiving unit 24 receives a change instruction from the user terminal 3.

For example, information such as a user identifier and a terminal identifier is stored in the user storage unit 31 constituting the user terminal 3. The user identifier is information for identifying a user. The user identifier is, for example, an address/name, a mobile phone number, an e-mail address, but may be an ID, and there is no limitation on the information, as long as it is information with which a user can be identified. The terminal identifier is information for identifying a user terminal 3. The terminal identifier is, for example, an IP address or an ID, or may be combined into a user identifier, that is, there is no limitation on the information, as long as it is information with which a user terminal 3 can be identified.

For example, the user receiving unit 32 receives various types of information from the automatic feeding assistance apparatus 1. The various types of information are, for example, the ordering information that prompts for placing an order for food, a statistical processing result, the fish status information, one or more parameters, or the like.

The user processing unit 33 performs various types of processing. The various types of processing are, for example, processing that determines whether or not the user receiving unit 32 has received various types of information, or the like.

For example, the user output unit 34 outputs the various types of information received by the user receiving unit 32. The output by the user output unit 34 is typically output via an output device such as a display screen, but may be, for example, accumulation in a storage medium or delivery of a processing result to another function or another program, or maybe transmission to another apparatus.

For example, in response to the user output unit 34 outputting the ordering information that prompts for placing an order for food, the user accepting unit 35 accepts the ordering information for placing an order for food.

Furthermore, for example, in response to the user output unit 34 outputting a statistical processing result, the fish status information, one or more parameters, or the like, the user accepting unit 35 accepts a prediction result such as a change instruction.

The user accepting unit 35 accepts information such as ordering information, for example, via an input device such as a touch panel, a keyboard, or mouse, but may receive the information from another apparatus.

The user transmitting unit 36 transmits the ordering information for placing an order for food and the prediction result such as a change instruction accepted by the user accepting unit 35, to the automatic feeding assistance apparatus 1.

The storage unit 11, the supplier information storage unit 111, the culturist information storage unit 112, the feeding storage unit 21, and the user storage unit 31 are preferably non-volatile storage media such as hard disks or flash memories, but may be realized also by volatile storage media such as RAMs.

There is no limitation on the procedure in which information is stored in the storage unit 11. For example, information may be stored in the storage unit 11 and the like via a storage medium, information transmitted via a network, a communication line, or the like may be stored in the storage unit 11 and the like, or information input via an input device may be stored in the storage unit 11 and the like. Examples of the input device include a keyboard, a mouse, and touch panel, and there is no limitation on the input device.

The processing unit 12, the remaining amount information acquiring unit 121, the judging unit 122, the statistical processing unit 123, the fish status information acquiring unit 124, the parameter acquiring unit 125, the predicting unit 126, the feeding processing unit 22, and the user processing unit 33 may be realized typically by MPUs, memories, or the like. Typically, the processing procedure of the processing unit 12 and the like is realized by software, and the software is stored in a storage medium such as a ROM. Note that the processing procedure may be realized also by hardware (dedicated circuits).

The transmitting unit 13, the feeding transmitting unit 23, and the user transmitting unit 36 are realized typically by a wireless or wired communication unit (e.g., a communication module such as an NIC (network interface controller) or a modem), but may be realized also by a broadcasting unit (e.g., a broadcasting module).

The output unit 14, the statistical processing result output unit 141, the fish status information output unit 142, and the user output unit 34 may be considered to include or not to include an output device, such as a display screen or a speaker. The output unit 14 and the like may be realized, for example, by driver software for an output device, a combination of an output device and driver software therefor, or the like.

The feeding receiving unit 24, and the user receiving unit 32 are realized typically by a wireless or wired communication unit, but may be realized also by a broadcast receiving unit (e.g., a broadcast receiving module). The same applies to the receiving function of the processing unit 12 and the like.

The user accepting unit 35 may be considered to include or not to include an input device. The user accepting unit 35 may be realized, for example, by driver software for an input device, a combination of an input device and driver software therefor, or the like.

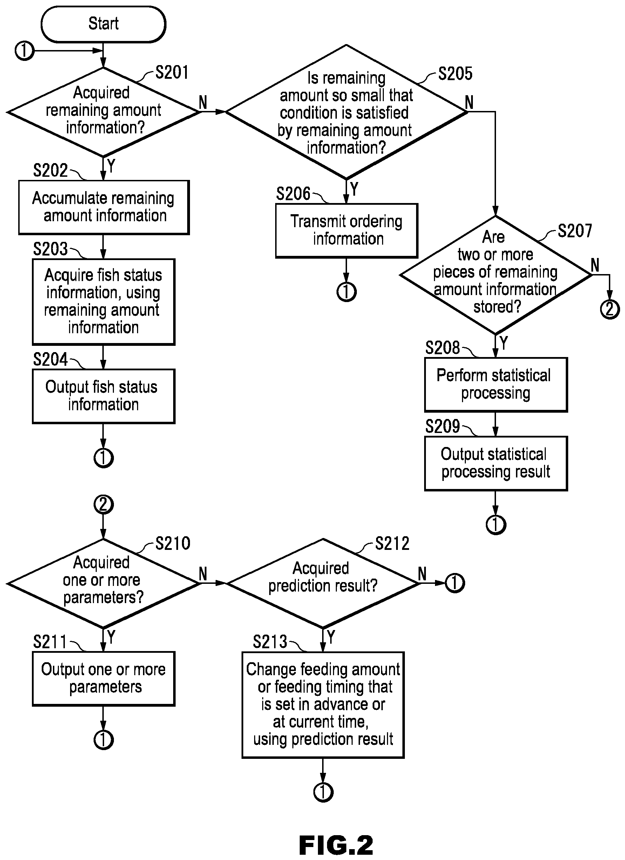

Next, an operation of the information system will be described with reference to the flowchart in FIG. 2. FIG. 2 is a flowchart illustrating an operation of the automatic feeding assistance apparatus 1.

(Step S201) The processing unit 12 determines whether or not the remaining amount information acquiring unit 121 has acquired remaining amount information. If the remaining amount information acquiring unit 121 has acquired remaining amount information, the procedure advances to step S202, and, otherwise, the procedure advances to step S205.

(Step S202) The processing unit 12 accumulates the remaining amount information acquired in step S201, in the storage unit 11.

(Step S203) The fish status information acquiring unit 124 acquires fish status information, using the one or more pieces of remaining amount information stored in the storage unit 11.

(Step S204) The fish status information output unit 142 outputs the fish status information acquired in step S203. Subsequently, the procedure returns to step S201.

(Step S205) The judging unit 122 judges whether or not the remaining amount of food acquired in step S201 is so small that a predetermined condition is satisfied by the remaining amount information. If the acquired remaining amount of food is so small that a predetermined condition is satisfied by the remaining amount information, the procedure advances to step S206, and, otherwise, the procedure advances to step S207.

(Step S206) The transmitting unit 13 transmits the ordering information. Subsequently, the procedure returns to step S201.

(Step S207) The processing unit 12 determines whether or not two or more pieces of remaining amount information are stored in the storage unit 11. If two or more pieces of remaining amount information are stored in the storage unit 11, the procedure advances to step S202, and, otherwise, the procedure advances to step S210.

(Step S208) The statistical processing unit 123 performs statistical processing on the two or more pieces of remaining amount information that are stored, thereby acquiring a statistical processing result.

(Step S209) The statistical processing result output unit 141 outputs the statistical processing result acquired in step 208. Subsequently, the procedure returns to step S201.

(Step S210) The processing unit 12 determines whether or not the parameter acquiring unit 125 has acquired one or more parameters. If the parameter acquiring unit 125 has acquired one or more parameters, the procedure advances to step S211, and, otherwise, the procedure advances to step S212.

(Step S211) The output unit 14 outputs the one or more parameters acquired in step S210. Subsequently, the procedure returns to step S201.

(Step S212) The processing unit 12 determines whether or not the predicting unit 126 has acquired a prediction result. If the predicting unit 126 has acquired a prediction result, the procedure advances to step S211, and, otherwise, the procedure returns to step S201.

(Step S213) The processing unit 12 changes, for example, the feeding amount or the feeding timing that is set for the automatic feeder 2 in advance or at a current time, using the prediction result acquired in step S212. Subsequently, the procedure returns to step S201.

Note that, in the flowchart in FIG. 2, the procedure is started at turning on of the automatic feeding assistance apparatus 1 or start of the program, and is terminated at turning off or an interruption at the end of the process. Note that there is no limitation on a trigger to start or end the process.

Hereinafter, a specific operation example of the information system will be described. The aspects in the following description can be subjected to various modifications, and do not limit the present invention.

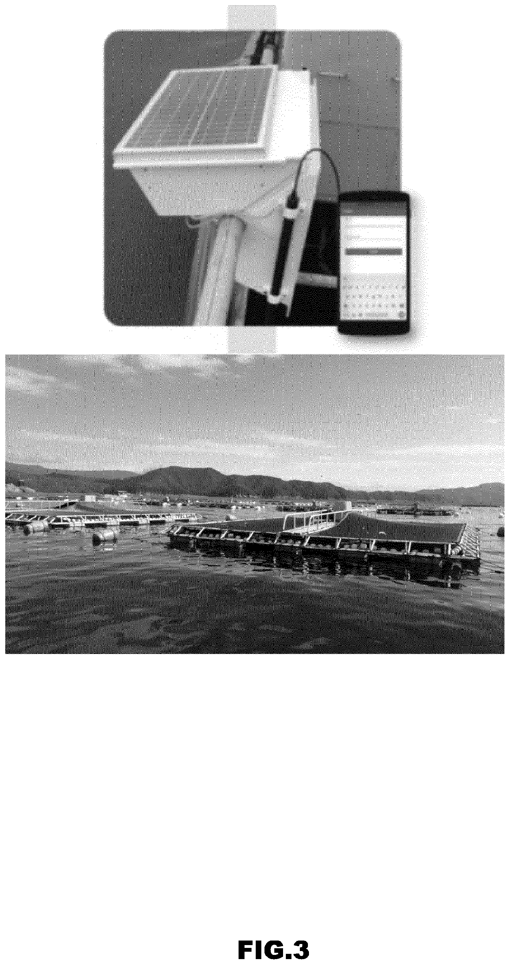

FIG. 3 is a conceptual diagram of the information system in this example. The information system of this example includes an automatic feeding assistance apparatus 1, and two or more automatic feeders 2 (e.g., two automatic feeders 2a and 2b).

The automatic feeding assistance apparatus 1 is realized by a mobile terminal of a culturist, and functions also as the user terminal 3. The two or more automatic feeders (2a and 2b) are provided on rafts that support fish enclosures in the sea, from positions on the sea surface. In the fish enclosure provided with the automatic feeder 2a, sea bream are cultivated. In the fish enclosure provided with the automatic feeder 2b, young yellowtail are cultivated.

The automatic feeding assistance apparatus 1 and the automatic feeders (2a and 2b) can communicate with each other via a network. The network is connected to a server of a supplier, and the automatic feeding assistance apparatus 1 can place an order for food to the supplier automatically using remaining amount information from the remaining amount sensors included in the automatic feeders (2a and 2b), or through an operation by a culturist has received the remaining amount information. The network is connected also to a satellite receiver, and the automatic feeding assistance apparatus 1 can use not only the environmental information (e.g., local parameters such as a water temperature and a flow velocity) from environmental sensors included in the automatic feeders (2a and 2b) but also information (e.g., global parameters such as a water temperature distribution and a oceanic current) from the artificial satellite.

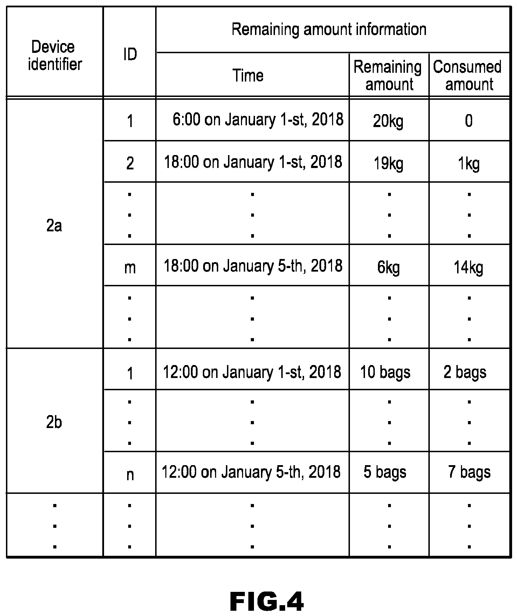

For example, one or at least two pieces of remaining amount information may be stored in a pair with a device identifier as shown in FIG. 4, in the storage unit 11 of the automatic feeding assistance apparatus 1.

FIG. 4 is a data structure table of remaining amount information. The remaining amount information has the time, the remaining amount, and the consumed amount. IDs (e.g., "1", "2", etc.) are respectively associated with one or more pieces of remaining amount information that are stored in a pair with one device identifier.

For example, a first piece of remaining amount information (hereinafter, remaining amount information 1) out of the one or more pieces of remaining amount information that is paired with the device identifier "2a" has the time "6:00 on January 1^{-st}, 2018", the remaining amount "20 kg", and the consumed amount "0". Also, a second piece of remaining amount information (remaining amount information 2) has the time "18:00 on January 1^{-st}, 2018", the remaining amount "19 kg", and the consumed amount "1 kg". In a similar manner, remaining amount information m has the time "18:00 on January 5^{-th}, 2018", the remaining amount "6 kg", and the consumed amount "14 kg".

Furthermore, remaining amount information 1 out of the one or more pieces of remaining amount information that is paired with the device identifier "2b" has the time "12:00 on January 1^{-st}, 2018", the remaining amount "10 bags", and the consumed amount "2 bags". In a similar manner, remaining amount information n has the time "12:00 on January 5^{-th}, 2018", the remaining amount "5 bags", and the consumed amount "7 bags".

Furthermore, the fish type information "sea bream" and the food type information "raw food" are also associated with the device identifier "2a". Moreover, the fish type information "young yellowtail" and the food type information "MP" are also associated with the device identifier "2b".

Moreover, price information is also stored in the storage unit 11. The price information is, for example, a group of pairs each constituted by the food type information and the unit price, such as "raw food, 1000 yen/kg", or "MP, 2000 yen/bag".

Furthermore, for example, a capacity information group, which is a group of pairs each constituted by the device identifier and the capacity information such as "2a, 20 kg" or "2b, 12 bags", is also stored in the storage unit 11.

Moreover, an ordering information group, which is a group of pairs each constituted by a device identifier and an ordering information, is also stored in the storage unit 11. In the ordering information group, ordering information that is paired with a certain device identifier has, in advance, the capacity information and the type information corresponding to the device identifier. A pair of the device identifier and the ordering information is, for example, a pair of the device identifier "2a" and the ordering information "raw food, 20 kg", a pair of the device identifier "2b" and the ordering information "MP, 12 bags", or the like.

The device identifier "2a", the feeding amount information "1 kg/feeding", the timing information "6:00, 18:00", and the like are stored in the feeding storage unit 21 of the automatic feeder 2a. The device identifier "2b", the feeding amount information "1 bag/feeding", the timing information "12:00", and the like are stored in the feeding storage unit 21 of the automatic feeder 2b. In this example, the timing information is fixed, and the feeding amount information can be changed by the processing unit 12 using the prediction result information acquired by the predicting unit 126.

It is assumed that the current time is 17:59 on January 5^{-th}, 2018. At this time, out of the remaining amount information 1 to the remaining amount information m that are paired with the device identifier "2a" shown in FIG. 4, the remaining amount information 1 to the remaining amount information (m-1) have already been stored, but the remaining amount information m at the last order has not been stored yet in the storage unit 11 of the automatic feeding assistance apparatus 1. Also, all of the remaining amount information 1 to the remaining amount information n that are paired with the device identifier "2b" shown in FIG. 4 have already been in the storage unit 11.

It is assumed that the temperature of seawater in a fish enclosure provided with the automatic feeder 2a is 15 degrees, the flow velocity is 1 m/sec, and 7 kg of food remains in the automatic feeder 2a.

When the current time is 18:00 on January 5^{-th}, 2018, 1 kg of food is discharged from the automatic feeder 2a to the fish enclosure.

Accordingly, in the automatic feeder 2a, the feeding processing unit 22 acquires the remaining amount "6 kg" using data (e.g., distance data) from a remaining amount sensor (e.g., a laser sensor), acquires the environmental information "15 degrees, 1 m/sec" using an environmental sensor (e.g., a temperature sensor, a flow velocity sensor, etc.), and also acquires the time "18:00 on January 5^{-th}, 2018" from a clock built in the MPU or the like. The feeding transmitting unit 23 transmits a set of the thus acquired time "18:00 on January 5^{-th}, 2018", remaining amount "6 kg", and environmental information "15 degrees, 1 m/sec", to the automatic feeding assistance apparatus 1 that is paired with the device identifier "2a".

In the automatic feeding assistance apparatus 1, the remaining amount information acquiring unit 121 receives the time and the remaining amount out of the above-described set, in a pair with the device identifier "2a", as the remaining amount information. The processing unit 12 accumulates the received remaining amount information "18:00 on January 5^{-th}, 2018, 6 kg, Null" in the storage unit 11 in association with the device identifier "2a". Null is a flag indicating that there is no such information (information corresponding to the consumed amount, in this example).

Next, the processing unit 12 subtracts the remaining amount information "6 kg" from the capacity information "20 kg" corresponding to the device identifier "2a", thereby acquiring the consumed amount "6 kg", and accumulates it in the storage unit 11 in association with the device identifier "2a". Accordingly, the remaining amount information m is newly stored in the storage unit 11, as a result of which all pieces of remaining amount information shown in FIG. 4 are obtained.

The fish status information acquiring unit 124 acquires fish status information, for example, using the following procedure, using the remaining amount information 1 to the remaining amount information m that are stored in a pair with the device identifier "2a", out of all pieces of remaining amount information in the storage unit 11.

That is to say, the fish status information acquiring unit 124 first acquires the period "5 days" corresponding to the difference between the times respectively contained in the remaining amount information 1 at the first order and the remaining amount information m at the last order, out of the remaining amount information 1 to the remaining amount information m. Next, the fish status information acquiring unit 124 acquires the consumed amount "14 kg" contained in the remaining amount information m at the last order, as the decrease amount of food in that period. Next, the fish status information acquiring unit 124 divides the decrease amount "14 kg" by the period "5 days", thereby acquiring the food decreasing velocity "2.8 kg/day".

Next, the fish status information acquiring unit 124 acquires the number information, by substituting the food decreasing velocity "2.8 kg/day" for the first function that is paired with the fish type information "sea bream". In this example, it is assumed that the number information "100 fish" is acquired. Then, the fish status information acquiring unit 124 acquires the fish status information "sea bream, 100 fish" having the fish type information "sea bream" and the thus acquired number information "100 fish".

The fish status information output unit 142 configures the character string "We can ship 100 sea bream." using the thus acquired fish status information "sea bream, 100 fish", and output the string. Accordingly, the display screen of the automatic feeding assistance apparatus 1 displays the character string "We can ship 100 sea bream." corresponding to the acquired fish status information.

Meanwhile, the judging unit 122 holds the condition "remaining amount ≤ 6 kg", and judges whether or not the remaining amount of food is so small that the condition is satisfied by the acquired remaining amount information, for example, every time the acquired remaining amount information is newly accumulated in the storage unit 11 according to the timing information. In this example, it is assumed that the judgment result by the judging unit 122 was negative whichever of the remaining amount information 1 to the remaining amount information (m-1) was accumulated.

When the remaining amount information m is accumulated, the remaining amount "6 kg" contained therein satisfies the above-described condition, and thus the judging unit 122 judges that the remaining amount of food is small, and the transmitting unit 13 transmits the ordering information, to the supplier specified with the supplier information in the supplier information storage unit 111. At that time, the transmitting unit 13 acquires ordering information "raw food, 20 kg" that is paired with the device identifier "2b" from the storage unit 11, and transmits the information.

The server of the supplier receives this ordering information, and ships 20 kg of raw food to the culturist. The culturist can prevent the automatic feeder 2a from running out of food by replenishing it with the whole or part of the 20 kg of raw food, and can reduce the food cost.

For example, the statistical processing unit 123 acquires a food cost per day for the automatic feeder 2a, using the remaining amount information 1 to the remaining amount information m corresponding to the device identifier "2a" and the unit price "1000 yen/kg" of raw food. The food cost is calculated as "2800 yen/day" by multiplying the consumed amount per day "2.8 kg/day" by the unit price "1000 yen/kg".

Furthermore, for example, the statistical processing unit 123 acquires a food cost per day for the automatic feeder 2b, using the remaining amount information 1 to the remaining amount information n corresponding to the device identifier "2b" and the unit price "2000 yen/bag" of MP. The food cost is calculated as "2500 yen/day" by multiplying the consumed amount per day "1.25 bags/day" by the unit price "2000 yen/bag". Moreover, the statistical processing unit 123 also acquires the total food cost per day for the two automatic feeders 2a and 2b. The total cost is calculated as "5300 yen/day" by totalizing the acquired two food costs "2800 yen/day" and "2500 yen/day". The statistical processing result output unit 141 outputs the thus acquired statistical processing results in the form of a table. Accordingly, the display screen further displays a table showing the acquired statistical processing results.

Furthermore, the parameter acquiring unit 125 acquires local parameters such as the water temperature and the flow velocity using the environmental information from an environmental sensor, and also acquires global parameters such as the water temperature distribution and the flow velocity distribution using the information from an artificial satellite. The output unit 14 displays the acquired local parameters in the table, and outputs a map in which the acquired global parameters are schematically expressed using the colors, the arrows, or the like.

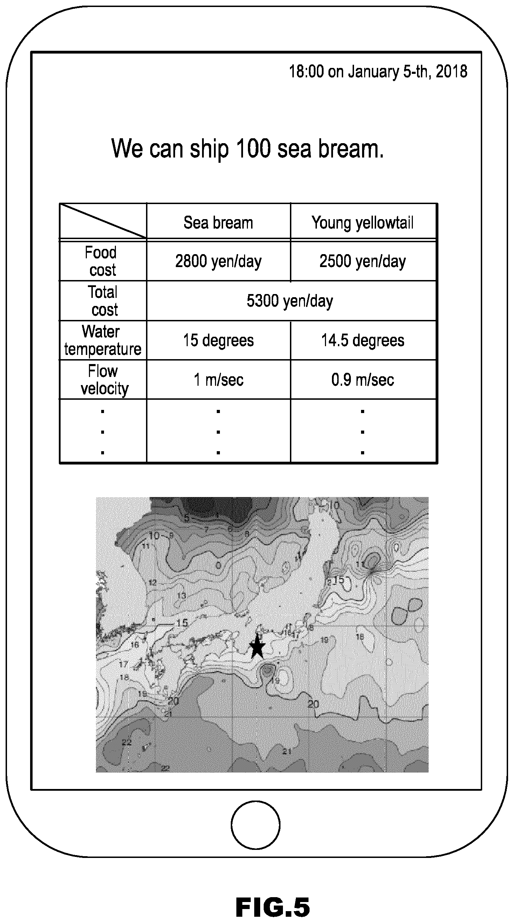

In this manner, the display screen displays, for example, a screen as shown in FIG. 5. FIG. 5 is a diagram showing an output example of fish status information, statistical processing results, and parameters. This screen has "18:00 on January 5^{-th}, 2018" corresponding to the time, the table showing the statistical processing results and the local parameter, and the map in which the global parameters such as the water temperature distribution are expressed using the colors and the like. In the map, the position of the fish enclosure based on the positional information from a GPS satellite is indicated by the asterisk.

The culturist predicts one or both of an optimal feeding amount and an optimal feeding timing, using one or more of the fish status information, the statistical processing results, and the parameters displayed on the screen, and inputs a change instruction based on the prediction result, using a touch panel or the like. The culturist may, for example, empirically predict one or both of an optimal feeding amount and an optimal feeding timing from information such as the swim amount of the school of fish, the color of seawater, the seawater temperature, the sunshine duration, and the tidal current. The predicting unit 126 acquires the change instruction as the prediction result, and the processing unit 12 changes the feeding amount or the feeding timing that is set for the automatic feeder 2a in advance or at a current time.

For example, if all increases and decreases in the parameters that seem to cause an abrupt temperature change or a red tide related to a large outbreak of phytoplankton exceed a threshold value, the culturist judges that it is necessary to change one or both of the feeding amount and the feeding timing, predicts one or both of an optimal feeding amount and an optimal feeding timing, and inputs a change instruction based on the prediction result. The predicting unit 126 acquires the change instruction as the prediction result, and the processing unit 12 changes the feeding amount or the feeding timing that is set for the automatic feeder 2a in advance or at a current time.

The operation that performs empirical prediction as described above is, for example, an operation that predicts a feeding amount or the like suited for the current fish status information or the like that is displayed on the screen, from a relationship between the fish status information or the like and the feeding amount or the like at two or more previous times that is stored by the culturist. Accordingly, for example, it is possible for the predicting unit 126 to predict one or both of an optimal feeding amount and an optimal feeding timing, by performing machine learning using, as input, a data group acquired from environmental sensors, artificial satellites, or the like, or using, as input, the data group and a result obtained by a person through judgment using the data group (e.g., a prediction result by the culturist, etc.).

As described above, according to this embodiment, the automatic feeding assistance apparatus 1 acquires remaining amount information regarding a remaining amount of food in the automatic feeder 2 configured to supply food to fish, judges whether or not the remaining amount of food is so small that a predetermined condition is satisfied by the remaining amount information, and, in a case in which it is judged that the remaining amount of food is so small that the predetermined condition is satisfied, transmits ordering information regarding placing an order for food, and thus it is possible to place an order, at a preferable timing, for food that is to be supplied to fish using the automatic feeder 2, or assist a user in placing the order.

Furthermore, supplier information for specifying a supplier of food is stored in the supplier information storage unit 111, and the automatic feeding assistance apparatus 1 transmits the ordering information to the supplier specified with the supplier information, and thus it is possible to place an order, at a preferable timing, for food that is to be supplied to fish using the automatic feeder 2.

Furthermore, culturist information for specifying a culturist of fish is stored in the culturist information storage unit 112, and the automatic feeding assistance apparatus 1 transmits the ordering information that prompts for placing an order for food, to the culturist specified with the culturist information, and thus it is possible to assist a user such as the culturist in placing an order, at a preferable timing, for food that is to be supplied to fish using the automatic feeder 2.

Furthermore, the automatic feeding assistance apparatus 1 receives remaining amount information from the two or more automatic feeders 2, performs statistical processing on two or more pieces of remaining amount information received from the two or more automatic feeders 2, thereby acquiring a statistical processing result, and outputs the statistical processing result, and thus it is possible for a user to see a statistical processing result (e.g., the total, the average, the distribution, etc.) regarding the remaining amount of food in each of the two or more automatic feeders 2, and, as a result, it is possible to accurately place an order for food collectively or individually for each of the two or more automatic feeders 2.

Furthermore, the automatic feeding assistance apparatus 1 acquires fish status information indicating a status of fish that are being cultivated, using the acquired remaining amount information, and outputs the fish status information, and thus it is possible for a user to see a fish state, and, as a result, it is possible to accurately perform management (e.g., feeding, shipment, etc.) of fish.

Furthermore, the above-described fish status information is fish type information indicating the type of fish, or number information regarding the number of fish that are to be brought to the market, and thus it is possible for a user to see the type of fish or the number of fish that are to be shipped, and, as a result, it is possible to accurately ship various types of fish.

Furthermore, the automatic feeding assistance apparatus 1 acquires one or more parameters regarding a movement of a fish, and acquires a prediction result, which is a result obtained by predicting one or both of the feeding amount and the feeding time, using one or more parameters, and thus it is possible to make the automatic feeders 2 supply a preferable amount of food to fish at a preferable timing, or assist a user in setting the automatic feeders 2.

Furthermore, in the above-described configuration, one of the one or more parameters is a fish body velocity obtained by dividing a movement velocity of a fish by a length of the fish, and, as a result, it is possible to acquire a prediction result, which is a result obtained by predicting one or both of the feeding amount and the feeding time, using the fish body velocity, without depending on the size of the fish.

Furthermore, processing according to the present embodiment may be realized using software. This software may be distributed via software downloading or the like. Also, this software may be recorded on a recording medium such as a CD-ROM and distributed. Note that this applies to the other embodiments in the present description.

Software that realizes the information processing apparatus according to the present embodiment is a program as follows. Specifically, this program is a program, using a computer-accessible storage medium including a remaining amount information acquiring unit 121 that acquires remaining amount information regarding a remaining amount of food in an automatic feeder 2 configured to supply food to fish, the program causing a computer to function as: a judging unit 122 that judges whether or not the remaining amount of food is so small that a predetermined condition is satisfied by the remaining amount information; and a transmitting unit 13 that, in a case in which the judging unit 122 judges that the remaining amount of food is so small that the predetermined condition is satisfied, transmits ordering information regarding placing an order for food.

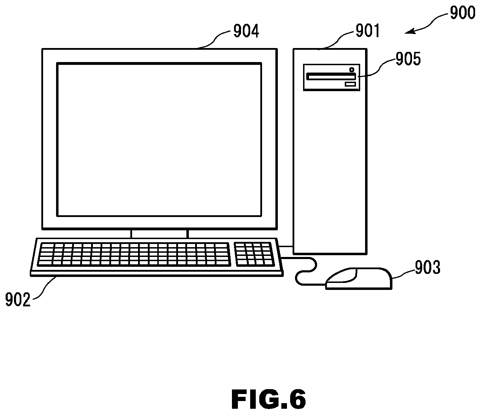

FIG. 6 an external view of a computer system 900 executes the programs according to the foregoing embodiments to realize the automatic feeding assistance apparatus 1 and the like. The foregoing embodiments may be realized using computer hardware and computer programs executed thereon. In FIG. 6, the computer system 900 includes a computer 901 including a disk drive 905, a keyboard 902, a mouse 903, and a display screen 904. The entire system including the keyboard 902, the mouse 903, and the display screen 904 may be referred to as a computer.

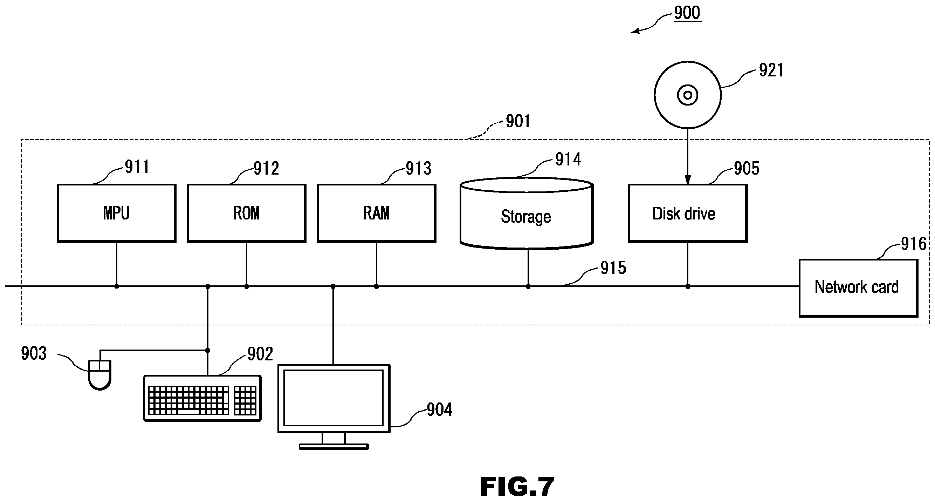

FIG. 7 is a diagram showing an internal configuration of the computer system 900. In FIG. 7, the computer 901 includes, in addition to the disk drive 905, an MPU 911, a ROM 912 in which a program such as a boot up program is to be stored, a RAM 913 that is connected to the MPU 911 and in which a command of an application program is temporarily stored and a temporary storage area is provided, a storage 914 in which an application program, a system program, and data are stored, a bus 915 that connects the MPU 911, the ROM 912, and the like, and a network card 916 for providing a connection to networks such as an internal network or an external network. Note that the storage 914 is, for example, a hard disk, an SSD, a flash memory, or the like.

The program for causing the computer system 900 to execute the functions of the automatic feeding assistance apparatus 1 and the like may be stored in a disk 921 such as a DVD or a CD-ROM that is inserted into the disk drive 905 and be transferred to the storage 914. Alternatively, the program may be transmitted via a network to the computer 901 and stored in the storage 914. At the time of execution, the program is loaded into the RAM 913. The program may be loaded from the disk 921, or directly from a network. Furthermore, the program may be read by the computer system 900 via a removable storage medium other than the disk 921 (e.g., a DVD, a memory card, etc.).

The program does not necessarily have to include, for example, an operating system (OS) or a third party program to cause the computer 901 described in detail to execute the functions of the automatic feeding assistance apparatus 1 and the like. The program may only include a command portion to call an appropriate function or module in a controlled mode and obtain desired results. The manner in which the computer system 900 operates is well known, and thus a detailed description thereof has been omitted.

The computer system 900 described above is a server or a desktop PC, but the automatic feeding assistance apparatus 1 and the user terminals 3 may be realized, for example, by mobile terminals such as smartphones, tablet devices, laptops, and the like. In this case, it is desirable that, for example, the keyboard 902 and the mouse 903 are replaced by a touch panel, and the disk drive 905 is replaced by a memory card slot, and the disk 921 is replaced by a memory card. The controllers of the automatic feeders 2 may have a basic hardware configuration that is similar to that of PCs or mobile terminals. Note that the description above is merely an example, and there is no limitation on the hardware configuration of the computer that realizes the automatic feeding assistance apparatus 1 and the like.

It should be noted that, in the programs, in a step of transmitting information, a step of receiving information, or the like, processing that is performed by hardware, for example, processing performed by a modem or an interface card in the transmitting step (processing that can be performed only by hardware) is not included.

Furthermore, the computer that executes this program may be a single computer, or may be multiple computers. That is to say, centralized processing may be performed, or distributed processing may be performed.

Furthermore, in the foregoing embodiments, it will be appreciated that two or more communication parts (the feeding transmitting unit 23, the feeding receiving unit 24, etc.) in one apparatus may be physically realized by one medium.

In the foregoing embodiment, each process (each function) may be realized as centralized processing using a single apparatus (system), or may be realized as distributed processing using multiple apparatuses.

The present invention is not limited to the embodiment set forth herein. Various modifications are possible within the scope of the invention.

### Industrial Applicability

As described above, the automatic feeding assistance apparatus according to the present invention has an effect that it is possible to place an order, at a preferable timing, for food that is to be supplied to fish using an automatic feeder, or assist a user in placing the order, and thus this apparatus is useful as an automatic feeding assistance apparatus and the like.

Furthermore, the automatic feeding assistance apparatus according to the present invention also has an effect that it is possible to make an automatic feeder supply a preferable amount of food to fish at a preferable timing, or to assist a user in setting the automatic feeder, and thus this apparatus is further useful as an automatic feeding assistance apparatus and the like.

## Claims

1. An automatic feeding assistance apparatus comprising:
a remaining amount information acquiring unit that acquires remaining amount information regarding a remaining amount of food in an automatic feeder configured to supply food to fish;
a judging unit that judges whether or not the remaining amount of food is so small that a predetermined condition is satisfied by the remaining amount information; and
a transmitting unit that, in a case in which the judging unit judges that the remaining amount of food is so small that the predetermined condition is satisfied, transmits ordering information regarding placing an order for food.

2. The automatic feeding assistance apparatus according to claim 1, further comprising:
a supplier information storage unit in which supplier information for specifying a supplier of food is stored,
wherein the transmitting unit transmits the ordering information to the supplier specified with the supplier information.

3. The automatic feeding assistance apparatus according to claim 1, further comprising:
a culturist information storage unit in which culturist information for specifying a culturist of fish is stored,
wherein the transmitting unit transmits the ordering information that prompts for placing an order for food, to the culturist specified with the culturist information.

4. The automatic feeding assistance apparatus according to claim 1,
wherein the remaining amount information acquiring unit receives remaining amount information from the two or more automatic feeders, and
the automatic feeding assistance apparatus further comprises:
a statistical processing unit that performs statistical processing on two or more pieces of remaining amount information received from two or more automatic feeders, thereby acquiring a statistical processing result; and
a statistical processing result output unit that outputs the statistical processing result.

5. The automatic feeding assistance apparatus according to claim 1, further comprising:
a fish status information acquiring unit that acquires fish status information indicating a status of fish that are being cultivated, using the remaining amount information acquired by the remaining amount information acquiring unit; and
a fish status information output unit that outputs the fish status information.

6. The automatic feeding assistance apparatus according to claim 5, wherein the fish status information is fish type information indicating the type of fish, or number information regarding the number of fish that are to be brought to the market.

7. The automatic feeding assistance apparatus according to claim 1, further comprising:
a parameter acquiring unit that acquires one or more parameters regarding a movement of a fish; and
a predicting unit that acquires a prediction result, which is a result obtained by predicting one or both of a feeding amount and a feeding time, using the one or more parameters.

8. The automatic feeding assistance apparatus according to claim 7, wherein one of the one or more parameters is a fish body velocity obtained by dividing a movement velocity of a fish by a length of the fish.

9. An automatic feeding assistance method realized using a remaining amount information acquiring unit that acquires remaining amount information regarding a remaining amount of food in an automatic feeder configured to supply food to fish, a judging unit, and a transmitting unit, comprising:
a judging step of the judging unit judging whether or not the remaining amount of food is so small that a predetermined condition is satisfied by the remaining amount information; and
a transmitting step of the transmitting unit, in a case in which the judging unit judges that the remaining amount of food is so small that the predetermined condition is satisfied, transmitting ordering information regarding placing an order for food.

10. A computer-accessible storage medium on which a program is stored, comprising a remaining amount information acquiring unit that acquires remaining amount information regarding a remaining amount of food in an automatic feeder configured to supply food to fish, the program causing a computer to function as:
a judging unit that judges whether or not the remaining amount of food is so small that a predetermined condition is satisfied by the remaining amount information; and
a transmitting unit that, in a case in which the judging unit judges that the remaining amount of food is so small that the predetermined condition is satisfied, transmits ordering information regarding placing an order for food.
